## Europäisches Patentamt

## European Patent Office

## Office européen des brevets

(11) Veröffentlichungsnummer: **0 106 836**

**B1**

(12)

# EUROPÄISCHE PATENTSCHRIFT

(45) Veröffentlichungstag der Patentschrift:
20.05.87

(51) Int. Cl.⁴: **H 01 B 15/00**

(21) Anmeldenummer: **83890160.1**

(22) Anmeldetag: **13.09.83**

(54) Vorrichtung zum Vorschub und/oder zur Bearbeitung eines fortlaufend geförderten Stranges.

(30) Priorität: **13.09.82 AT 3424/82**

(43) Veröffentlichungstag der Anmeldung:
**25.04.84 Patentblatt 84/17**

(45) Bekanntmachung des Hinweises auf die Patenterteilung:
**20.05.87 Patentblatt 87/21**

(84) Benannte Vertragsstaaten:
**BE CH DE FR GB IT LI LU NL SE**

(56) Entgegenhaltungen:
**US-A-2 319 198**
**US-A-3 724 310**

(73) Patentinhaber: **FONDAMET J. & M. JANU KG,**
**Ziegelofengasse 4, A-2544 Leobersdorf**
**Niederösterreich (AT)**

(72) Erfinder: **Janu, Michael, Novalisgasse 1-3, A-1130**
**Wien (AT)**

(74) Vertreter: **Gibler, Ferdinand, Dipl.Ing.Dr.tech.,**
**Dorotheergasse 7/14, A-1010 Wien (AT)**

## Beschreibung

Die Erfindung betrifft eine Vorrichtung zum Vorschub und ggf. zur Bearbeitung eines fortlaufend in einer Vorschubrichtung geförderten Stranges mittels eines Werkzeugpaares, dessen Werkzeuge an den freien Enden von Werkzeugträgern gelagert sind und in derselben Ebene an einander gegenüberliegenden Seiten des Stranges angreifen, insbesondere Vorrichtung zum Aufschneiden der Umhüllung von Kabeln.

Eine derartige Vorrichtung wurde z.B. durch die US-PS 2 319 198 bekannt. Bei dieser bekannten Lösung sind Steuerglieder vorgesehen, die exzentrisch zur Lagerung der Werkzeugträger an diesen angreifen, um die Werkzeugträger relativ zu den zu bearbeitenden Strängen einstellen bzw. feststellen zu können. Dabei verbleiben die Werkzeugträger während der gesamten Behandlung des Stranges in der eingestellten Lage in Bezug auf den zu behandelnden Strang, bzw. in Bezug auf den Rahmen der Vorrichtung. Dadurch ergibt sich, daß zur Erzielung des nötigen Vorschubes separate Mittel an dem Strang angreifen mussen.

Ziel der Erfindung ist die Verbesserung einer solchen Vorrichtung der zufolge diese Vorrichtung einfacher als bisher aus wenigen robusten Bestandteilen gestaltet und dennoch zu einer außergewöhnlich hohen Leistung befähigt werden kann, wobei sie in einer kompakten Bauweise weitestgehend störungsfrei und mit geringem Energieaufwand und geringem Verschleiß zu arbeiten vermag.

Erfindungsgemäß sind zur Erreichung dieses Zieles bei einer Vorrichtung der eingangs definierten Gattung die die beiden Werkzeuge tragenden, freien Enden der Werkzeugträger mittels je einer an jeden der Werkzeugträger angreifenden Exzenterwelle in der durch das Werkzeugpaar bestimmten Ebene in synchrone, in etwa elliptischen Bahnen folgende Exzenterbewegungen versetzbar.

Diesen Bewegungen der Werkzeuge auf annähernd elliptischen Bahnen ist es zu verdanken, daß bei gleichzeitigem Vorschub des Stranges auch eine wirksame Bearbeitung dieses Stranges mit einem feinstufig einstellbaren Anpreßdruck jeweils erförderlicher Höhe stattfinden kann.

Bei einer Vorrichtung zum Aufschneiden der Umhüllung von Kabeln werden die Werkzeuge dadurch befähigt, auch eine Stahlumhüllung einwandfrei und problemlos zu durchtrennen.

Nach einer bevorzugten Ausführungsform des Erfindungsgegenstandes sind die Werkzeugträger als zweiarmige Hebel ausgebildet und etwa in ihrer Längsmitte an den Exzenterwellen gelagert, wobei die Enden der den Werkzeugen gegenüberliegenden Hebelarme zwecks Einstellung des Abstandes der Werkzeuge gegeneinander, z.B. mittels eines Gewindeoder Schneckentriebes, verstellbar gelagert sind.

Um den Werkzeugträgern die ihnen von der Exzenterwelle erteilten Bewegungen auf annähernd elliptischen Bahnen zu ermöglichen, können die Enden der den Werkzeugträgern gegenüberliegenden Hebelarme mittels Lenkern an zwei gegeneinander verstellbare Gleitstücke oder Wandermuttern angelenkt sein.

Dient die erfindungsgemäße Vorrichtung zum Aufschneiden der Umhüllung von Kabeln, dann sind die Werkzeuge als auf den Werkzeugträgern drehfest angeordnete, kreisscheibenförmige oder polygonal gestaltete Messer auszubilden, zwischen deren einander in der Werkzeugebene gegenüberliegende Kanten der zu bearbeitende Kabelstrang einführbar ist.

Gleichwohl solcherart ausgebildete und durch ihre Lagerung auf der Exzenterwelle betätigte Werkzeuge schon allein befähigt sind, für den Vorschub des zu bearbeitenden Stranges zu sorgen, kann es in bestimmten Fällen ratsam sein, noch zusätzliche Vorkehrungen für die Zentrierung und den Vorschub des Stranges zu treffen.

Es ist dann zusätzlich ein Paar der Zentrierung und das Werkzeugpaar beim Vorschub des Stranges unterstützender, als Räder, Walzen oder Kufen ausgebildeter Vorschuborgane vorgesehen, die in einer zur Ebene der Werkzeuge senkrechten Ebene einander mit einstellbarem Abstand gegenüberliegen und mittels eines Antriebes in synchrone Bewegungen versetzbar sind.

Bei einer bevorzugten Gestaltung eines solchen Vorschubrades ist dessen Radkranz mit Querrippen profiliert. Diese Querrippen sind zweckmäßigerweise an den beiden Flanken eines in der Mittelebene seines Querschnittes verlaufenden Grates ausgebildet und ragen seitwärts und radial hinaus.

Mit dieser Profilierung wird nicht nur eine zuverlässige Mitnahme des Stranges in der Förderrichtung gewährleistet, sondern es wird auch sichergestellt, daß das Umhüllungsmaterial des zu bearbeitenden Kabels die Lauffläche des Vorschubrades nicht verschmutzt und seitwärts zwischen den Rippen abgedrängt wird.

Eine Ausführungsform einer erfindungsgemäßen Vorrichtung zum Aufschneiden der Umhüllung von Kabeln ist in den Zeichnungen beispielsweise veranschaulicht. Im einzelnen zeigt

Figur 1 eine schematische Seitenansicht dieser Vorrichtung nach Pfeil I der Figur 2 und 3, die

Figur 2 ist eine Draufsicht nach Pfeil 11 der Figuren 1 und 3 und

Figur 3 ist eine Seitenansicht nach Pfeil 111 der Figuren 1 und 2.

Figur 4 stellt ein Vorschub- und Zentrierrad in einer Seitenansicht in größerem Maßstab dar und

Figur 5 zeigt in der oberen Hälfte einen Querschnitt nach V-V der Figur 4 und in der unteren Hälfte eine Stirnansicht des Vorschubrades.

Auf dem Tragrahmen 1 der erfindungsgemäßen Vorrichtung ruht der Getriebekasten 2, an dessen Flanke ein Motor 3 zum Antrieb der beiden kreisscheibenförmigen, zum Schlitzen der Kabelumhüllung bestimmten Messer 4, 4' angeordnet ist. Der Abtriebswelle dieses Motors 3 ist eine Kupplung 5 zugeordnet. Der Motor 3 setzt über diese Kupplung 5 die mit ihm koaxiale Exzenterwelle 7 des oberen Messers 4 direkt in Drehung und diese obere Exzenterwelle 7 ist ihrerseits mit der unteren (7') über ein Zahnradgelege drehverbunden.

Die beiden Messer 4 und 4' lagern drehfest an den freien Enden der schwenkbaren, als zweiarmige Hebel ausgebildeten Werkzeugträger 6, 6', die ihrerseits auf den zugehörigen Exzenterwellen 7, 7' drehbar lagern; die Excentrizität kann in der Praxis etwa 5 mm betragen.

Die den Werkzeugen 4, 4' gegenüberliegenden Enden der Werkzeugträger 6, 6' sind vermittels der Lenker 8, 8', der Gleitstücke 9, 9' und eines mit einer Spindel verbundenen, mit nicht dargestellten Schraub- oder Schneckentrieben zusammenarbeitenden Stellrades 10, dessen Welle im Lager 11 geführt ist, gegeneinander verstellbar, um dadurch den Abstand der beiden Messer 4, 4' voneinander und somit die Schnitt-Tiefe und auch den Anpreßdruck der Werkzeuge 4, 4' exakt einstellen und nach Bedarf variieren zu können. In den Gleitstücken 9, 9' sind Federpakete anzuordnen, mittels derer der Anpreßdruck nach oben begrenzbar ist, um durch Überbeanspruchung bedingte Messerbeschedigungen auszuschließen. Eine bereits bei der Montage einzustellende Vorspannung muß im Betrieb beibehalten werden, damit auch bei großen Schnittgutdurchmessern nie die Blocklänge der Federpakete erreicht werden kann.

Auf der den Gleitstücken 9, 9' zugeordneten Seite werden demnach die auf den Exzenterwellen 7, 7' lagernden Werkzeugträger 6, 6' parallel zur Trägerachse, also parallel zur Vorschubrichtung geführt.

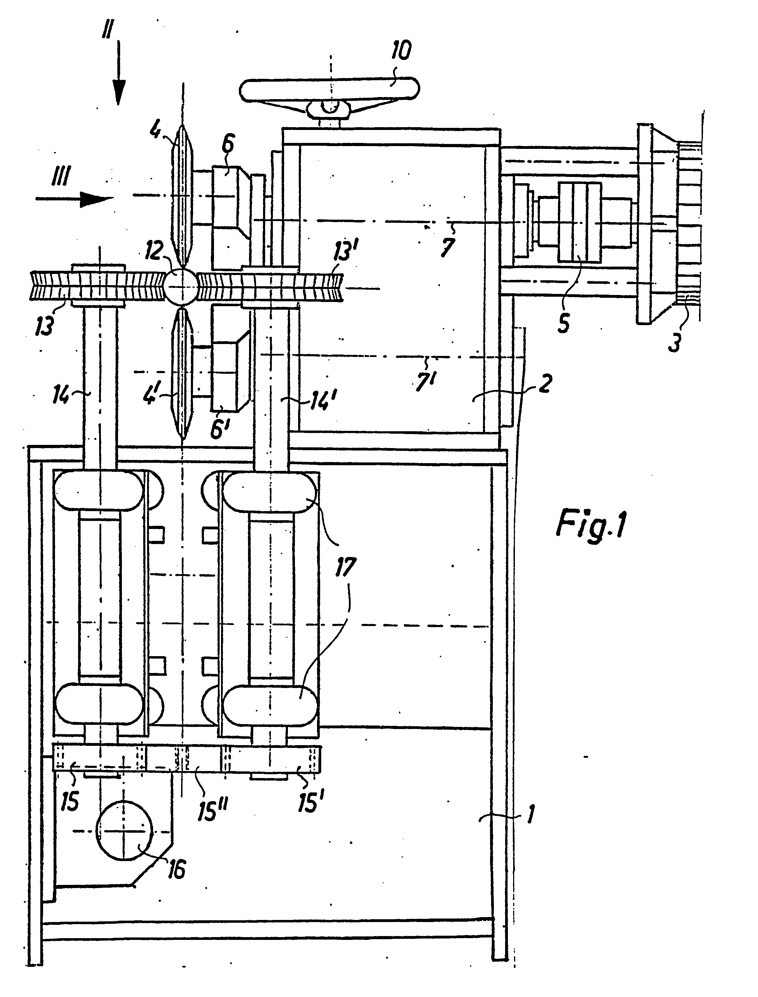

Das Kabel 12, dessen Mantel mittels der Messer 4, 4' aufzuschlitzen ist, wird - wie Figur 1 zeigt - zwischen diesen beiden Messern 4, 4', die gegeneinander verstellbar sind, durchgeführt, wobei es seine Vorschubbewegung durch die Bewegungen der beiden diese Messer drehfest tragenden Werkzeugtrager 6, 6' erhält. Die diese Messer 4, 4' tragenden Enden der Werkzeugträger 6, 6' führen nämlich infolge des Antriebes durch die Exzenterwellen 7, 7' in etwa elliptischen Bahnen folgende Bewegungen aus, wobei ein Messerhub etwa einer Vertikalbewegung von 20 mm und einer Horizontalbewegung von 10 mm entspricht.

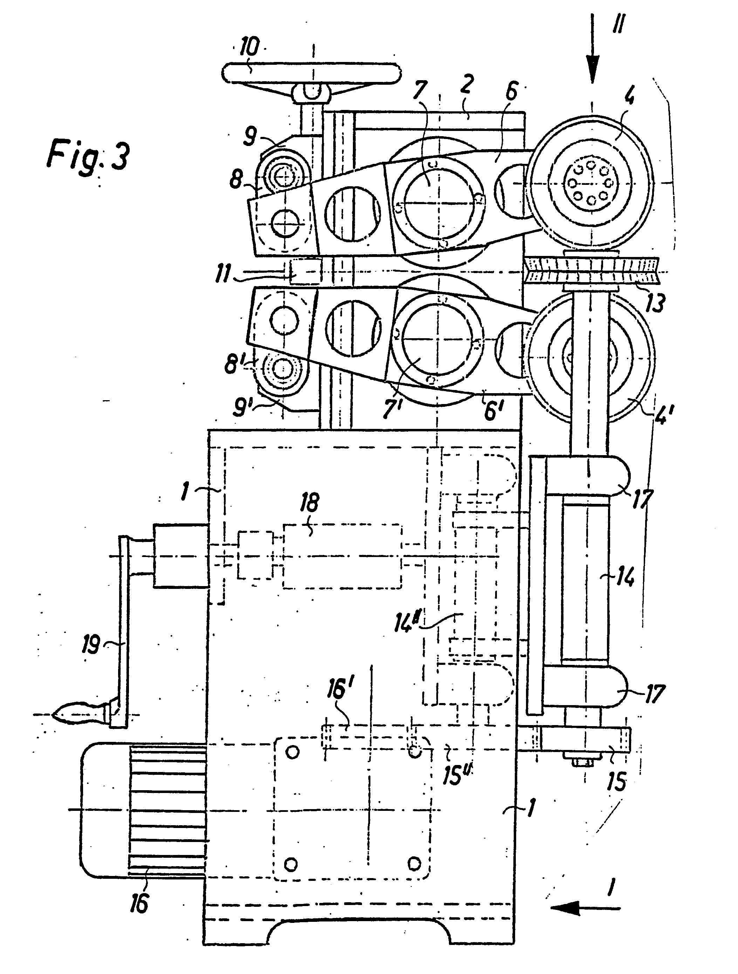

Bei der dargestellten Ausführungsform des Erfindungsgegenstandes ist zur Gewährleistung der mit einer Geschwindigkeit von etwa 7 m/s erfolgenden Vorschubbewegung des Kabels 12 sowie zu dessen Zentrierung zusätzlich noch ein Paar von Vorschubrädern 13, 13' vorgesehen, deren Radkranz profiliert ist und die mittels der Antriebswellen 14, 14' über ein Zahnradgetriebe vom Antriebsmotor 16 in Drehung versetzt werden. Dieses Getriebe ist innerhalb des Tragrahmens 1 untergebracht, wogegen die Antriebswellen 14, 14' der Vorschubräder 13 außerhalb dieses Tragrahmens 1 an dessen Flanke in Lagern 17, 17' gelagert sind. Der Abstand der Antriebswellen 14, 14' voneinander ist einstellbar und zwar mittels eines Spindeltriebes 18 (Figur 3) und einer zugehörigen Kurbel 19, die an der den Lagern 17, 17' gegenüberliegenden Flanke des Tragrahmens 1 lagert.

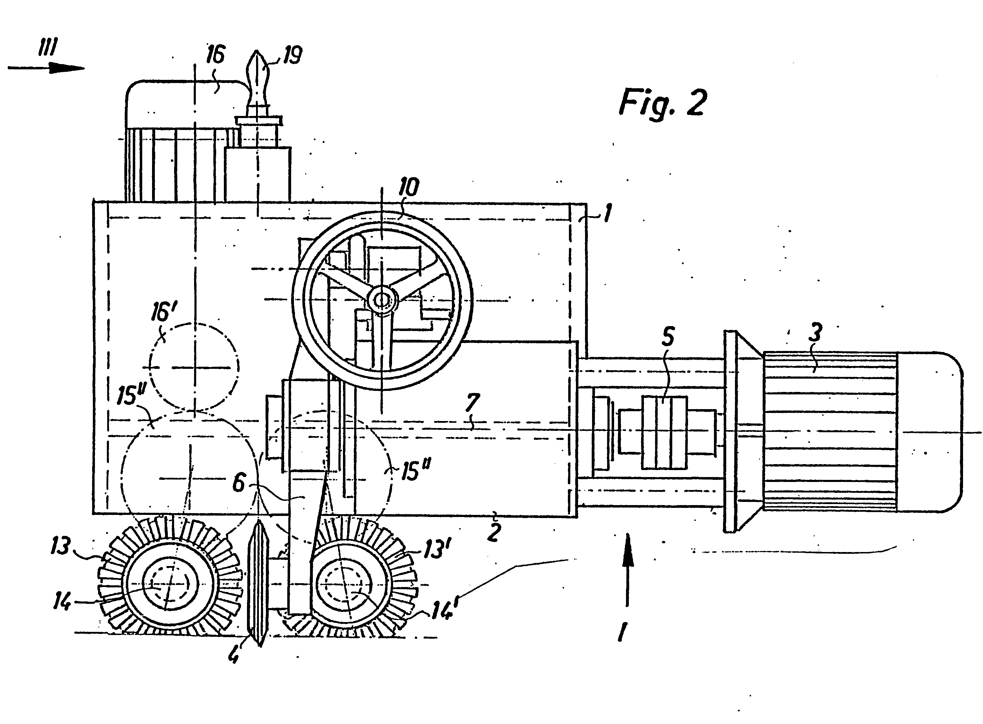

Wie in den Figuren 2 und 3 gestrichelt angedeutet ist, erfolgt der Antrieb der Antriebswellen 14 und 14' der Vorschubräder 13, 13' über deren am unteren Ende angeordnete Trieblinge 15 bzw. 15', die ihrerseits über die miteinander kämmenden, an den unteren Enden von Getriebewellen 14'' angeordneten Zahnräder 15'' vom Abtrieb 16' des Motors 16 in Drehung versetzt werden. Dank dieser Getriebeausbildung ist der Abstand der Antriebswellen 14, 14' voneinander durch ein Verschwenken dieser Wellen in horizontaler Ebene variierbar.

Auf dieses Weise kann der Anpreßdruck der Vorschubräder 13, 13' geregelt werden, wobei darauf zu achten ist, daß bei der engsten Stellung stets eine geringe Vorspannung vorhanden sein soll, damit die Spindellagerung im Spindeltrieb 18 stets auf Zug beansprucht wird.

Auch im Spindeltrieb 18 ist eine Feder anzuordnen, um den Anpreßdruck nach oben hin zu begrenzen und dadurch der Gefahr von Überbeanspruchungen der Maschinenteile vorzubeugen.

Zweckmäßigerweise ist der Vorschubweg der Werkzeuge mit dem Exzentertrieb etwas geringer zu bemessen als deren Schnittlänge; dadurch wird erreicht, daß sich die Schnittlängen ein wenig überlappen.

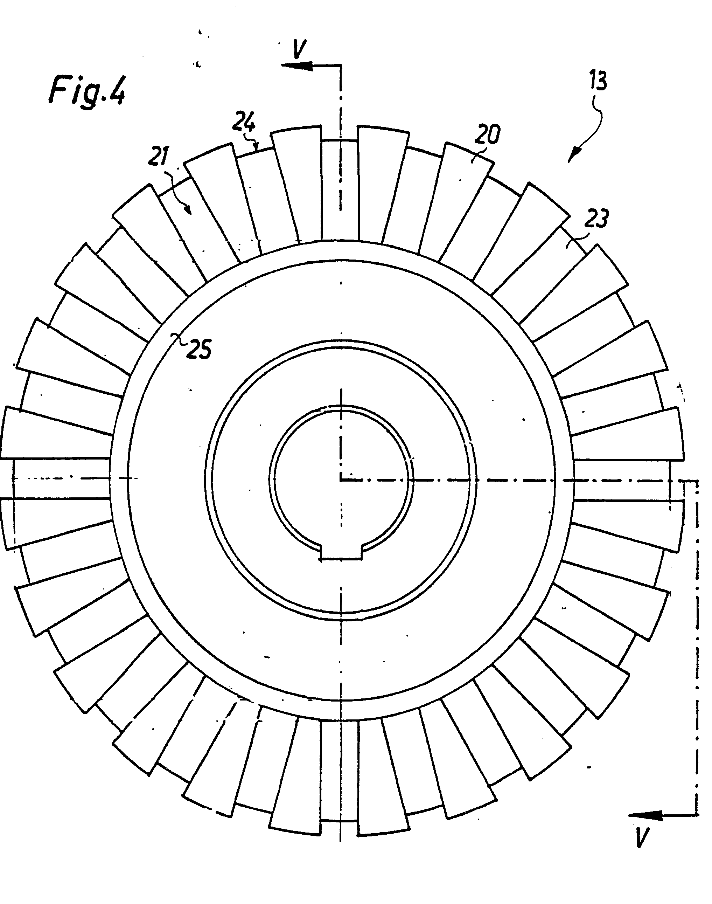

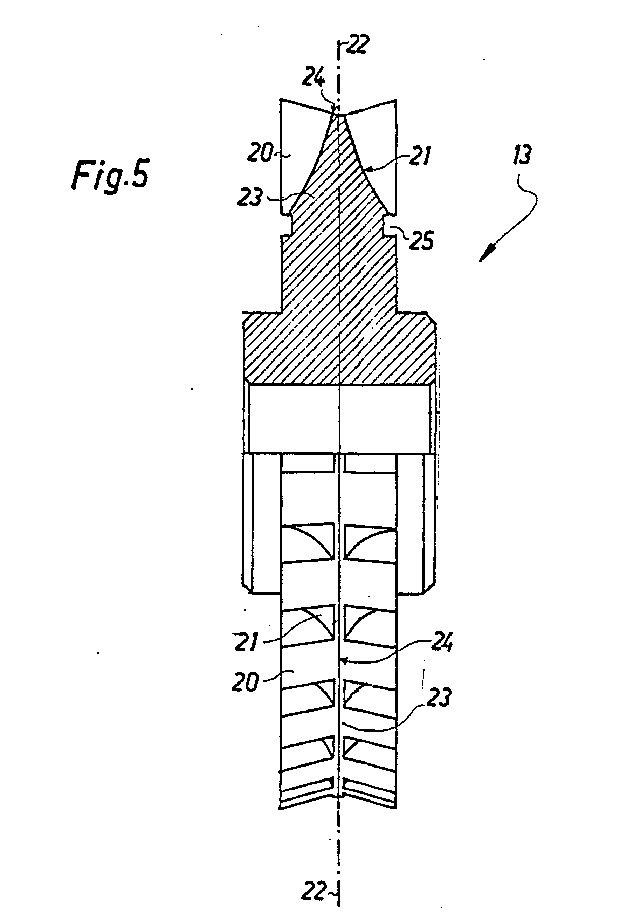

Das in den Figuren 4 und 5 dargestellte einzelne Vorschubrad 13 ist an seinem Radkranz mit Querrippen 20 profiliert, die seitwärts und radial ausragend an den beiden Flanken 21 des in der Mittelebene 22 verlaufenden Grates 23 ausgebildet sind. Dieser Grat 23 weist eine stumpfe Kante 24 auf, und die an den Flanken 21 ansetzenden Querrippen 20 ragen über diese Kante 24 radial aus. Innerhalb des Bereiches der Querrippen 20 verläuft beidseits eine Nut 25 in jeder Seitenfläche des Vorschubrades 13.

Zur Bedienung der Maschine werden die Abstände der kreisscheibenförmigen Messer 4, 4' und der Vorschubräder 13, 13' auf das Soll-Maß eingestellt und sodann wird das Schnittgut, nämlich beispielsweise das Kabel 12, zwischen die Messer und Vorschubräder eingeführt, worauf dann nach Einschalten der Motoren 3 und 16 die selbsttätige Vorschubbewegung einsetzt.

Krumme Kabel müssen so geführt werden, daß die Krümmungsebene senkrecht und das krumme Ende nach oben steht, so daß die Schnittstelle waagrecht den Messern zugeführt wird.

Anstelle der Vorschubräder 13, 13' kann man auch andere der Zentrierung und den Vorschub dienende Organe, z.B. feststehende Kufen oder in eine hin- und hergehende Bewegung versetzbare Kufen, vorsehen.

**Patentansprüche**

1. Vorrichtung zum Vorschub und ggf. zur Bearbeitung eines fortlaufend in einer Vorschubrichtung geförderten Stranges (12) mittels eines Werkzeugpaares, dessen Werkzeuge (4, 4') an den freien Enden von Werkzeugträgern (6, 6') gelagert sind und in derselben Ebene an einander gegenüberliegenden Seiten des Stranges angreifen, insbesondere Vorrichtung zum Aufschneiden der Umhüllung von Kabeln, dadurch gekennzeichnet, daß die die beiden Werkzeuge (4, 4') tragenden, freien Enden der Werkzeugträger (6, 6') mittels je einer an jeden der Werkzeugträger (6, 6') angreifenden Exzenterwelle (7, 7') in der durch das Werkzeugpaar bestimmten Ebene in synchrone, in etwa elliptischen Bahnen folgende Exzenterbewegungen versetzbar sind.

2. Vorrichtung nach Patentanspruch 1, dadurch gekennzeichnet, daß die Werkzeugträger (6, 6') als zweiarmige Hebel ausgebildet und etwa in ihrer Längsmitte an den Exzenterwellen (7, 7') gelagert sind und daß die Enden der den Werkzeugen (4, 4') gegenüberliegenden Hebelarme zwecks Einstellung des Abstandes der Werkzeuge (4, 4') gegeneinander, z.B. mittels Gewinde-oder Schneckentriebes, verstellbar gelagert sind.

3. Vorrichtung nach Patentanspruch 2, dadurch gekennzeichnet, daß die Enden der den Werkzeugen (4, 4') gegenüberliegenden Hebelarme mittels Lenkern (8, 8') an zwei gegeneinander verstellbaren Gleitstücke (9, 9') oder Wandermuttern angelenkt sind.

4. Vorrichtung nach einem der Patentansprüche 1 bis 3, dadurch gekennzeichnet, daß die Werkzeuge (4, 4') als kreisscheibenförmige oder polygonal gestaltete Messer ausgebildet sind, zwischen deren einander gegenüberliegenden Kanten der zu bearbeitende Strang (12) in der Werkzeugebene einführbar ist.

5. Vorrichtung nach einem der Patentansprüche 1 bis 4, gekennzeichnet durch zumindest ein Paar von der Zentrierung dienender und das Werkzeugpaar (4, 4') beim Vorschub des Stranges (12) unterstützender, als Räder (13, 13'), Walzen oder Kufen ausgebildete Vorschuborgane, die in einer zur Werkzeugebene senkrechten Ebene einander mit einstellbarem Abstand gegenüberliegen und mittels eines Antriebes (16) in synchrone Bewegungen versetzbar sind.

6. Vorrichtung nach Patentanspruch 5, dadurch gekennzeichnet, daß der Radkranz des Vorschubrades (13, 13') mit Querrippen (20) profiliert ist.

7. Vorrichtung nach Patentanspruch 6, dadurch gekennzeichnet, daß die Querrippen (20) an den beiden ausgerundeten Flanken (21) eines in der Mittelebene (22) des Radquerschnittes verlaufenden Grates (23) ausgebildet sind und seitwärts herausragen.

8. Vorrichtung nach Patentanspruch 7, dadurch gekennzeichnet, daß der Grat (23) als stumpfe Kante (24) ausgebildet ist.

9. Vorrichtung nach einem der Patentansprüche 6 bis 8, dadurch gekennzeichnet, daß die Querrippen (20) über den Grat (23) radial hinausragen.

10. Vorrichtung nach einem der Patentansprüche 6 bis 9, dadurch gekennzeichnet, daß innerhalb des Bereiches der Querrippen (20) an beiden Seiten des Vorschubrades (13, 13') eine rundumlaufende Nut (25) vorgesehen ist.

**Claims**

1. Device for feeding and if necessary working a cord (12), conveyed continuously in a feed direction, by means of a tool pair, the tools if which (4, 4') are mounted on the free ends of tool carriers (6, 6') and, in the same plane, engage on sides of the cord which are located opposite one another, in particular a device for cutting open the sheathing of cables, characterized in that the free ends of the tool carriers (6, 6'), which ends carry the two tools (4, 4'), can be set, in the plane determined by the tool pair, in synchronous eccentric motions following approximately elliptical paths by means of in each case an eccentric shaft (7, 7') engaging on each of the tool carriers (6, 6').

2. Device according to patent claim 1, characterized in that the tool carriers (6, 6') are made as double-arm levers and are mounted approximately in their longitudinal centre on the eccentric shafts (7, 7'), and that the ends of the lever arms located opposite the tools (4, 4') are adjustably mounted, for the purpose of setting the distance of the tools (4, 4') relative to one another, for example by means of a screw drive or a worm drive.

3. Device according to patent claim 2, characterized in that the ends of the lever arms located opposite the tools (4, 4') are coupled by means of guide lengths (8, 8') to two sliding pieces (9, 9') or shifting nuts which can be adjusted relative to one another.

4. Device according to one of patent claims 1 to 3, characterized in that the tools (4, 4') are made as circular-disc-shaped blades or blades of polygonal configuration, between the edges of which, which edges are located opposite one another, the cord (12) to be worked can be introduced in the tool plane.

5. Device according to one of patent claims 1 to 4, characterized by at least one pair of feed members which are used for centering, support the tool pair (4, 4') during the feeding of the cord (12), are made as wheels (15, 15'), rollers or skids and which, in a plane perpendicular to the tool plane, are located opposite one another at an adjustable distance and can be set in synchronous motions by means of a drive (16).

6. Device according to patent claim 5, characterized in that the wheel rim of the feed wheel (13, 13') is profiled with cross ribs (20).

7. Device according to patent claim 6, characterized in that the cross ribs (20) are formed on the two rounded off flanks (21) of a ridge (23) and project sideways, which ridge (23) runs in the centre plane (22) of the wheel cross-section.

8. Device according to patent claim 7, characterized in that the ridge (23) is made as a blunt edge (24).

9. Device according to one of patent claims 6 to 8, characterized in that the cross ribs (20) project radially beyond the ridge (23).

10. Device according to one of patent claims 6 to 9, characterized in that, within the area of the cross ribs (20), a groove (25) is provided which runs all round on both sides of the feed wheel (13, 13').

**Revendications**

1. Dispositif permettant de faire avancer un brin de matériau (12) acheminé de manière continue suivant une direction d'avance, et éventuellement d'effectuer sur lui une opération, au moyen d'une paire d'outils (4, 4') qui sont montés aux extrémités libres de porte-outil (6, 6') et agissent, dans le même plan, sur des côtés opposés du brin de matériau, notamment dispositif permettant de fendre la gaine de câbles, caractérisé en ce que, à l'aide d'arbres excentriques (7, 7') agissant à raison d'un sur chacun des porte-outil (6, 6'), les extrémités libres de ces porte-outil (6, 6') qui partent les deux outils (4, 4') peuvent se déplacer dans le plan défini par la paire d'outils suivant des mouvements excentrés synchrones qui suivent des trajectoires sensiblement elliptiques.

2. Dispositif selon la revendication 1, caractérisé en ce que les porte-outil (6, 6') sont realisés sous forme de leviers à deux bras et sont montés sensiblement au milieu de leur longueur sur les arbres excentriques (7, 7'), tandis que les extremites des bras de levier situées à l'oppose des outils (4, 4') sont montées réglables en position l'une par rapport à l'autre, par exemple à l'aide d'un engrenage à vis sans fin ou vis-mère, en que de régler l'écartement des outils (4, 4') l'un par rapport à l'autre.

3. Dispositif selon la revendication 2, caractérisé en ce que les extrémités des bras de levier situées à l'opposé des outils (4, 4') sont articulées, au moyen de biellettes (8, 8'), sur deux écrous va-et-vient ou coulisseaux (3, 3') réglables en position l'un par rapport à l'autre.

4. Dispositif selon l'une des revendications 1 à 3, caractérise en ce que les outils (4, 4') sont constitués par des couteaux en forme de disques circulaires ou de forme polygonale, et entre les arêtes en regard desquels on peut introduire, dans le plan des outils, le brin de matériau (12) sur lequel on doit effectuer une opération.

5. Dispositif selon l'une des revendications 1 à 4, caractérisé par au moins une paire d'organes d'avance, constitués par des roues (13, 13'), rouleaux ou patins, pour servir au centrage et aider la paire d'outils (4, 4') à faire avancer le brin de matériau (12) lesquels organes d'avance sont situés en regard l'un del'autre, avec un espacement réglable, dans un plan perpendiculaire au plan des outils et sont déplaçables suivant des mouvements synchrones à l'aide d'un dispositif d'entraînement (16).

6 Dispositif selon la revendication 5, caractérisé en ce que la jante de la roue d'avance (13, 13') est profilée de manière à présenter des nervures transversales (20).

7. Dispositif selon la revendication 6, caractérisé en ce que nervures transversales (20) sont réalisées sur les leux flancs arrondis (21) d'un voile (23) s'étendant dans le plan médian (22) de la section tranversale de la roue et font saillie latéralement.

8. Dispositif selon la revendication 7, caractérisé en ce que le voile (23) possède une tranche de forme obtuse (24).

9. Dispositif selon l'une des revendications 6 à 8 , caractérisé en ce que les nervures transversales (20) font saillie radialement sur le voile (23).

10. Dispositif selon l'une des revendications 6 à 9, caractérisé en ce qu'il est prévu une gorge circonférentielle (25) sur les deux côtes de la roue d'avance (13, 13') et à l'interieur de la zone des nervures transversales (20).

Fig.1

Fig. 2

0 106 836

Fig. 3

Fig.4

0 106 836

7

Fig.5